# EUROPEAN PATENT SPECIFICATION

(11) **EP 1 802 828 B1**
(45) Date of publication and mention of the grant of the patent: **15.09.2010**
(21) Application number: 05804709.3
(22) Date of filing: 05.10.2005
(51) Int. Cl.: E04F 15/02, E04F 13/08

(54) **SUBSTRATE ELEMENT, MODULAR TILING ELEMENT, SYSTEM OF INTERLOCKING MECHANISMS AND METHOD OF TILING**
TRÄGERELEMENT, MODULARES FLIESENELEMENT, SYSTEM VON VERRIEGELUNGSMECHANISMEN UND VERFAHREN ZUM VERLEGEN VON FLIESEN
ELEMENT DE SUBSTRAT, ELEMENT DE CARRELAGE MODULAIRE, SYSTEME DE VERROUILLAGE DE MECANISMES ET PROCEDE DE CARRELAGE

(30) Priority: 05.10.2004 ZA 200405332
(43) Date of publication of application: 04.07.2007
(73) Proprietor: Heyns, Nicolaas Albertus, Heldervue 7130 Somerset West (ZA)
(72) Inventor: Heyns, Nicolaas Albertus, Heldervue 7130 Somerset West (ZA)
(74) Representative: Gee, Steven William
(86) International application number: PCT/ZA2005/000151
(87) International publication number: WO 2006/039726

(56) References cited:
- EP-A- 1 441 086
- WO-A-03/040491
- DE-A1- 2 246 778
- GB-A- 1 308 011
- US-A- 2 200 382
- US-A- 4 840 825
- US-B1- 6 247 286

## Description

### FIELD OF THE INVENTION

This invention relates to the provision of cladding such as stone or ceramic tiles for floors, walls and ceilings of buildings, or the like. In particular, the invention relates to a substrate element, a modular tiling element, a system of interlocking mechanisms and a method of tiling.

### BACKGROUND TO THE INVENTION

Sheets of cladding materials, such as stone or ceramic tiles are typically rectangular or square and are typically produced with certain standardised dimensions. However, the dimensions of the tiles vary to some extent and these variations complicate the task of a tiler, who strives to avoid uneven spacing and/or alignment of tiles, when tiling. These problems can be avoided by cutting the tiles to standard dimensions in a process called "rectification", but this process is very costly. The problems can also be avoided by selecting tiles of similar or identical dimensions, for being installed together, but this process is also costly. Tilers can attempt to compensate for the variations in dimensions of tiles by laying tiles spaced widely apart, but the wide spacing is unsightly. The use of skilled labour in all these attempt to resolve problems relating to varying dimensions of tiles, is very costly.

Conventional installation of stone and ceramic tiles is by means of adhering the tile to a substructure with an adhesive like tile cement. Various complementary materials are use in the installation process for preventive purposes and to assist the tiler. A plastic layer can be installed to prevent damp and specialised board to prevent cracking of tiles through movement in the substructure. Spacers are used to create even grout lines. These materials, waste generated during installation, and labour make the process of tiling costly and cumbersome.

Innovative flooring improvements offer solutions to installation problems by means of floor elements which snap, click or lock together in order to interconnect and form a floor covering which "floats" on a substructure without being fastened to it. These systems have inherent disadvantages like the inability to be fastened to a substructure and therefore have only a decorative as opposed to structural and decorative quality. Damaged elements cannot be removed individually without disassembling the whole floor. Disassembly cannot be done without damage to the various elements of the floor. Floor elements have no means to secure the fastening of these elements on a wall or ceiling, which limits application.

Where elements have a means to secure fastening to a substructure, these elements lack the ability to lock. There is a need to prevent interconnected elements from moving during installation or when adjustments are being made. A hold could be created between elements by introducing an interference factor between the interconnecting profiles of complementary elements. This, however, will prevent longitudinal movement or unencumbered adjustment.

Systems which are not fasted to a substructure lack load-being strength and overall flexural strength. The systems are designed to interconnect without regard for these requirements. Solutions to tiling and installation problems are offered without commercial viability or the consideration of practical implications; e.g. the applicant is aware of an incident where thirty percent of the tiled area of an exhibition display of an innovation system broke when visitors walked on it.

US Patent 2,200,382 (Clark) and US Patent 4,840,825 (Aristodimou), both disclose tiling systems in which sheets of cladding material are attached to substrates, which in turn are attached to support structures such as existing walls, by fasteners extending through protuberances of bottom layers of the substrates. Adjacent substrates engage each other in tongue-and-groove fashion. These attachments neither have the structural integrity nor the secured fastening to bear the load of heavier cladding materials, e.g. to bear stone and ceramic tiles on walls, with the result that the tiling systems disclosed by these patents are flawed and limited in application. If these systems are used to clad a wall with heavier cladding materials, the fastening layer will tear and the system will collapse. The system can also not function as floating floors without fastening.

German Patent 2 246 778 (Kreibaum), discloses a similar cladding system to those of Clark and Aristodimou, but in which the tiling material is in the form of a composite wooden sheet and in which fasteners extend through the entire substrate, thus improving structural strength. However, substrates of particleboard are described, which do not have significant structural strength, and the disclosure only mentions attachment of the substrate to a support structure in the form of an existing wall. Adjacent elements of tiling material are also glued together on the particleboard substrate. Kreibaum did not envisage a tiling system for various commercial materials nor one with universal application.

US Patent 6,247,286 (Heyns) discloses a tiling system similar to that of Kreibaum, but in which the substrate significantly contributes to structural strength of the tiling material and the support structure, e.g. by forming a drywall. Further, the tiling system disclosed by Heyns allows some degree of sliding movement between adjacent substrates, due to the sliding tongue-and-groove engagement of the substrates, but is prone to shifting. Heyns' tiling system can also be used for a variety of cladding materials, including stone cladding. The system, however, could not free float without fastening. The tongue-and-groove engagement of substrates provide interconnection but not interlocking, which results in an inability of the elements forming the system to remain in place during installation. Further, two edges of the tiling material are unsupported by the substrate and would not withstand much working load.

WO 03/040491 (Della Pepa) discloses a substrate in the form of a paving frame defining holes that allow it to be bonded to stone cladding, with the result that the stone cladding is not supported under its entire underside, so that it would not be able to withstand the working loads to which flooring is subjected. The use of footfall material underneath the cladding material is also described, but if the footfall material is flexible, the cladding material will not be sufficiently supported under load, and will break. Due to the profile of the rubber gasket and the need for it to be tightly supported, the cladding sheets or tiles must conform precisely to the required dimensions of the support frame, so the system does not tolerate much deviation form the required dimensions. Further, two edges of each cladding sheet extend above the attachment formations for attaching adjacent substrates together, so that these edges are not supported by the substrate.

The Della Pepa application has some apparent similarities to the Heyns patent and the description appears to be mainly repetitive of the Heyns patent.

European Patent Application No. 1 441 086 (Schulte-Führes) discloses flooring systems comprising floor tiles that have floor covering materials layered onto base plates and the base plates have interlocking tongue and groove formations along their edges, by which they are attached to one another. In one embodiment, the base layers lock together completely, leaving no scope for accommodating imperfections in the sizes of the floor covering materials and this embodiment can thus only be used in limited instances. In another embodiment, the tongue and groove formations have some play, allowing tiles to shift relative to each other, but there is no means to restrain the shifting and permitting floor tiles to shift relative to each other during use is highly undesirable and unsafe.

Other prior cladding systems include flooring elements that are attached to each other by engagement of complementary tongue-and-groove formations, or variations thereon, combined with locking engagement of auxiliary attachment formations. These locking engagements prevent any movement between adjacent flooring elements and the systems do not make provision for the attachment of stone or ceramic tiling cladding material to a substrate or elements to a support structure. These lock, snap or click systems, as they are known, were designed specifically for floors and prevent movement between interlocked elements and were designed for such elements to be glued to a substructure or to float freely without being fastened to a substructure.

United Kingdom Patent No 1 308 011 (Couquet) discloses one such system comprising tiles upper layers of covering materials that are attached to plastic backing sheets that can clip together at their edges.

The objects of the present invention include the provision of means for installation of a cladding material such as tiles, which is easy to implement and which compensates easily for inconsistencies in dimensions of elements of the cladding material, e.g. inconsistent dimensions of tiles, while matching or preferably exceeding the aesthetic and functional qualities of known techniques. In order to achieve these objectives, the invention seeks to solve the problem of providing a substrate element which can interlock with other substrate elements, whereby some degree of sliding movement is allowed between adjacent elements in interlocked position. This objective is not achieved by Della Pepa, which only provides fixed interlocking attachment of substrate elements, without allowing sliding movement.

The objects of the invention are broadly stated in the immediately preceding paragraph and are met by the invention. In addition to these objects, some embodiments of the invention also hold a very large number of further advantages that will be clear from the description below to a person skilled in the art and while not being limited thereto, the advantages include: multifunctional utility flanges that can accommodate electrical conduits, water channelling, heating elements, attachment, and the like; allowing for longitudinal and lateral/transversal movement of tiles; providing thermal and moisture barriers; protection for tiles prior to and during installation; reduction of waste; detachability and reusability of tiles; etc.

The objects of the invention include providing a tiled covering of stone or ceramic tiles comprising a system of modular tiling elements, that can easily be attached together in an evenly spaced, close arrangement and that can also be attached to a supporting substructure such as an existing wall, floor or ceiling, or a supporting framework. A surface cladding material, like stone or ceramic tile, bonded to a substrate forms the modular tiling element. The object of the invention further include providing a tiled covering that has sufficient structural integrity to bear the loads of the cladding material and working loads, even if not attached to a support structure. Further objects of the invention include providing modular tiling elements of which the surface cladding material can individually be removed after installation.

The objects of the invention include providing a commercially viable system of tiling which incorporates practical solutions to problems facing the hard surface division of the flooring industry. This is achieved by the invention through the amelioration of the disadvantages or prior art and by the introduction of novel and distinguishing features.

It is an object of the invention to create an inclusive, commercially viable tiling system for ceramic, stone and the like cladding materials to form a floor, wall, ceiling or roof covering which is affordable.

It is an object of the invention to provide a standardised tiling module for use in the tiling system to construct a tiled covering.

It is an object of the invention to provide the tiling module with a commercial and affordable surface cladding material of ceramic, marble, granite or the like materials which rests completely on a substrate to which it is bonded.

It is an object of the invention to provide the cladding material of the tiling module with a substrate which fully protects it whilst supporting it.

It is an object of the invention to provide the tiling module with a substrate which will strengthen it and increase the load-bearing quality of the module.

It is an object of the invention to provide the module with a substrate which can interlock with other substrates and, in doing so, enable modules to interlock.

It is an object of the invention to provide modules which interlock to form a tiling system which has increased overall flexural strength.

It is an object of the invention to provide the tiling module with a substrate which when interlocked with the substrates of other modules will form a thermal insulation barrier of a wall, floor or roof.

It is an object of the invention to provide a substrate to the module with a means of securing the interlocking with the substrates of other complementary modules utilising a system of interlocking mechanisms.

It is an object of the invention for the modules to be able to move longitudinally or laterally/transversally when in an interlocked position with another or other modules.

It is an object of the invention to provide a tiling module used in a tiling system which is able to compensate for height, width and length tolerances in the manufactured cladding or tiling material.

It is an object of the invention to provide the tiling module with a substrate which can resist water, moisture and damp.

It is an object of the invention to provide the tiling module with a substrate which has translucent qualities for a combination with a translucent cladding material to form a module with translucent characteristics.

It is an object of the invention to provide an inclusive tiling system utilising interlocking tiling modules to design and construct floors, walls and roofs primarily for the residential market, and to clad these floors, walls and roofs with a high quality and elegant surface covering.

It is an object of the invention to provide a tiling system which will eliminate costly labour and installation materials.

It is an object of the invention to provide a tiling system where a single damaged tile can easily be removed and replaced after a floor, wall or roof had been installed, without damage to adjacent tiling modules.

It is an object of the invention to provide a tiling system where preselection of colour, grain and type of cladding takes place prior to installation.

It is an object of the invention to provide a tiling system which will reduce waste during installation.

It is an object of the invention to provide a tiling system which prevents cracking or warping of the cladding material due to movement in the substructure.

It is an object of the invention to provide a versatile tiling system which can be merely decorative by being installed through interlocking the tiling modules, or which add to structural integrity by being fastened to a substructure.

It is an object of the invention to provide a user-friendly tiling system which is inclusive and comprehensive and easy to install by an unskilled person.

It is an object of the invention to provide a tiling system which will assist the installer.

It is an object of the invention to provide a system that is detachable and reusable.

It is an object to the invention to provide a tiling system where the modules utilised in the system install in a flat position.

It is an object of the invention to provide a system where grout lines can be manipulated.

It is an object of the invention to provide a tiling system which can be formed independently and "locked in" by perimeter fasteners to form an independent floor or part of a floor.

It is an object of the invention to provide a tiling system which has material cost-saving implications.

It is an object of the invention to provide a tiling system where breakage or damage to the cladding materials during installation is limited.

It is an object of the invention to provide a tiling module which will eliminate or overcome damage to the edges of the cladding material by protecting it.

It is an object of the invention to provide a standardised tiling module which can be produced on a cost-effective commercial basis by means of a simple mechanical and automated process.

It is an object of the invention to provide a standardised tiling module and tiling system which can be utilised by architects, interior designers and quantity surveyors to plan and design floors, walls roofs and the like by integrating various cladding materials and designs into an inclusive and comprehensive system.

It is an object of the invention to provide a tiling module which can be utilised in the manufacture of furniture surfaces and panels for office partitioning.

It is an object of the invention to provide a substrate which is designed with thermal insulation features.

It is an object of the invention to provide a substrate designed to allow for the removal and replacement of cladding material after installation.

It is an object of the invention to provide a substrate which can be produced through a single manufacturing process.

It is an object of the invention to provide a substrate which can absorb excess adhesive into recessed areas in order for the tiling module to be pressed to the required thickness during the lamination process.

It is an object of the invention to provide a substrate with utility flanges on at least one, but preferably two adjacent sides of the substrate.

It is an object of the invention to provide substrate utility flanges with grooves for the laying of under-floor heating elements or electrical conduits.

It is an object of the invention to provide substrate utility flanges with a channel for water direction.

It is an object of the invention to provide substrate utility flanges where compensation for tolerances in the cladding material can take place.

It is an object of the invention to provide substrate utility flanges with recessed slots for fastening elements like nails or screws.

It is an object of the invention to provide substrate utility flanges with installation guides to assist with design and installation.

It is an object of the invention to provide substrate utility flanges with spacers which form protective barriers for the cladding material, an axis for installation direction and a grout-line guide.

It is an object of the invention to provide substrate utility flanges which provide a means of securing the interlocking of substrates.

It is an object of the invention to provide a system of interlocking mechanisms on at least one flange and one adjacent side of the substrate, but preferably on two adjacent flanges and the two opposite sides of the substrate.

It is an object of the invention to provide interlocking mechanisms on two adjacent sides of the substrate which have a multifunction quality.

It is an object of the invention to provide within the interlocking mechanisms of the substrate a means of securing the overlapping cladding material of one module to the exposed substrate of an adjoining complementary module.

It is an object of the invention to provide within the interlocking mechanisms of the substrate a means of stabilising interlocking tiling modules.

It is an object of the invention to provide within the interlocking mechanisms of the substrate a means of locking two complementary modules together and still allow for longitudinal and lateral/transversal movement within the locked mode.

According to a further object of the invention there is provided a tiled covering for a wall, floor, ceiling or roof which has an elegant, expensive appearance and where the cladding tiles are aligned in a smooth array.

These and other objects of the present invention are achieved in the preferred embodiments disclosed below by providing a tiling system which utilises a standardised tiling module, comprising a surface layer of cladding material and a substrate element of structural material oriented in a fixed relation to the underside of the surface layer of cladding material. The substrate element supports and protects the surface layer on a supporting structure.

### BRIEF DESCRIPTION OF THE INVENTION

According to a first aspect of the invention there is provided a substrate element for a modular tiling element, said substrate element defining:
a generally planar face;
at least two attachment formations extending along at least one protruding edge of the substrate element, protruding beyond the face; and
at least two attachment formations extending along at least one recessed edge of the substrate element, recessed from the face, the attachment formations on each protruding edge being complementary to the attachment formations on each recessed edge,
   wherein one attachment formation on a protruding edge and its complementary attachment formation on a recessed edge of an adjacent substrate element, are lockingly engagable to form a lockable set of attachment formations, and one attachment formation on a protruding edge and its complementary attachment formation on a recessed edge of an adjacent substrate element, are slidingly engagable with an interference fit to form an adjustable set of attachment formations.

The complementary attachment formations in an adjustable set may include a recess defined proximate an edge of one substrate element and a complementary protuberance, extending from an edge of the adjacent substrate element, the protuberance being receivable in the recess formation with an interference fit, but with play in a direction that is generally coplanar with at least one of the substrate elements.

The complementary attachment formations in a lockable set may include a recess defined proximate an edge of one substrate element and a complementary, resilient clip formation, extending from an edge of the adjacent substrate element, the clip formation being receivable in the recess in a clipping-fashion.

The protuberance of the adjustable set and the clip formation of the lockable set, may be spaced apart with a groove defined between them, and the recesses of the adjustable set and the lockable set may be similarly spaced apart with a tongue extending between them, the tongue being receivable in a pinching-fashion in the groove, when the adjustable set and lockable set of attachment formations engage.

The protuberance of the adjustable set and the clip formation of the lockable set, may be spaced further apart than the recesses of the adjustable set and the lockable set.

The face may have a rectangular outline and the substrate element may include two protruding edges, protruding beyond the face on two sides of the substrate element, and two recessed edges, recessed from the edges of the face, on the two remaining sides of the substrate element. The two protruding edges may protrude from adjacent sides of the substrate element and the recessed edges may be recessed from the remaining two adjacent edges.

Each of the protruding edges may have the form of a flange and a utility groove and/or a fastening slot may be defined in at least on of the flanges.

A plurality of rib formations and recesses may be defined on the face and/or on an underside of the substrate, opposite from the face. Alternatively, the substrate element may have a solid construction in which no holes are defined.

The substrate element may include at least one spacer, protruding from the substrate element, between the face and a protruding edge of the substrate element, generally perpendicularly to the face.

The substrate element may have at least one marking disposed at a location that corresponds to a fraction of the length of the face and/or at least one marking that corresponds to a laying direction of the substrate element.

According to another aspect of the invention there is provided a modular tiling element comprising a substrate element and a surface layer of cladding material bonded to the substrate element, wherein the substrate element is as described hereinabove and the surface layer is bonded to the face of the substrate element. The tiling element thus has most of the characteristics of the substrate element described hereinabove.

The surface layer of cladding material and the face of the substrate element may be of the same general size and may be bonded together, generally in register and the bonding between the cladding material and the face of the substrate material may be complete, i.e. there are no coplanar parts of the cladding material that is not bonded and needs to be kept free of adhesive.

The cladding material may comprise a ceramic and/or stone tile.

According to a further aspect of the invention there is provided a method of tiling, said method comprising:
preparing modular tiling elements by bonding surface layers of cladding material to substrate elements as described hereinabove;
moving the tiling elements into a side-by-side arrangement with their edges in abutment;
engaging complementary formations defined on the edges of adjacent tiling elements;
   wherein a lockable set of the complementary engagement formations lock the edges of adjacent tiling elements together, and an adjustable set of the complementary engagement formations engage with a slidable interference fit, allowing relative movement between adjacent tiling elements, generally along the common plane of the tiling elements, while the complementary formations remain in engagement.

The substrate elements may be attached to a support structure and the substrate elements may be attached to the support structure by fasteners extending through flanges of the substrate elements, protruding beyond edges of the surface layer of cladding material. Alternatively, the substrate elements may be attached together and may be free floating on the support surface.

According to yet a further aspect of the invention there is provided a tiling system laid in accordance with the method as described hereinabove, wherein the tiling system comprises tiling elements as described hereinabove.

The upper faces of the surface layers of adjacent tiling elements may be aligned to provide a smooth surface.

According to yet a further aspect of the invention there is provided a system of interlocking mechanisms, defined on the flanges of a substrate elements as described hereinabove, wherein the engagement of the attachment formations of adjacent substrate elements allow the substrate elements to move longitudinally and transversely to the engaged attachment formations. The engagement of the attachment formations may form a pincher lock.

### BRIEF DESCRIPTION OF THE DRAWINGS

Some of the objects of the invention have been described above. Other objects and advantages of the invention will appear from the description that follows. For a better understanding of the present invention and to show how the same may be carried into effect, the invention will now be described, by way of non-limiting example, with reference to the accompanying diagrammatic drawings.

In the drawings:
Figure 1 shows an exploded, sectional side view of a cladding system in accordance with a first embodiment of the invention;
Figure 2 shows a bottom view of a substrate element of the cladding system of Figure 1;
Figure 3 shows a side elevational view of the substrate element of Figure 2;
Figure 4 shows a top plan view of the substrate element of Figure 2;
Figure 5 shows a side elevational view of the substrate element of Figure 4;
Figure 6 shows a three-dimensional view of a modular structural element of the tiling system of Figure 1;
Figure 7 shows an exploded top plan view of the cladding system of Figure 1;
Figure 8 shows a detail, exploded sectional side view of the engagement of two adjacent substrate elements of the cladding system of Figure 1;
Figures 9 to 12, each show alternative configurations for the engagement formations of cladding systems in accordance with a second, third, fourth and fifth embodiment of the invention, respectively;
Figures 13 to 15 show process steps for the engagement of the substrate elements of the cladding system of Figure 1;
Figure 16 shows a side elevational view of the cladding system of Figure 1, showing a protective spacer, protruding adjacent each surface layer of cladding material;
Figure 17 shows a sectional side view of the cladding system of Figure 1;
Figure 18 shows a cladding system in accordance with a sixth embodiment of the invention;
Figure 19 shows a sectional side view of engaged structural elements of the cladding system of Figure 1, with an oversized surface layer;
Figure 20 shows a sectional side view of engaged structural elements of the cladding system of Figure 1, with an undersized surface layer;
Figure 21 shows a three-dimensional, part sectional view of the cladding system of Figure 1;
Figure 22 shows an exploded sectional side view of the cladding system of Figure 1, in a vertical orientation for use in exterior cladding;
Figure 23 shows a top plan view of a modular structural element in accordance with a seventh embodiment of the invention; and
Figures 24 to 27 show detailed views of engaged attachment formations of the substrate elements of the cladding system of Figure 1.

### DETAIL DESCRIPTION OF THE DRAWINGS

Referring to the drawings, a tiling system in accordance with the invention is generally indicated by reference numeral 10. Where similar components in other preferred embodiments of the invention are shown, the same reference numerals are used as for the first preferred embodiment, with suffixes referring to the subsequent preferred embodiments.

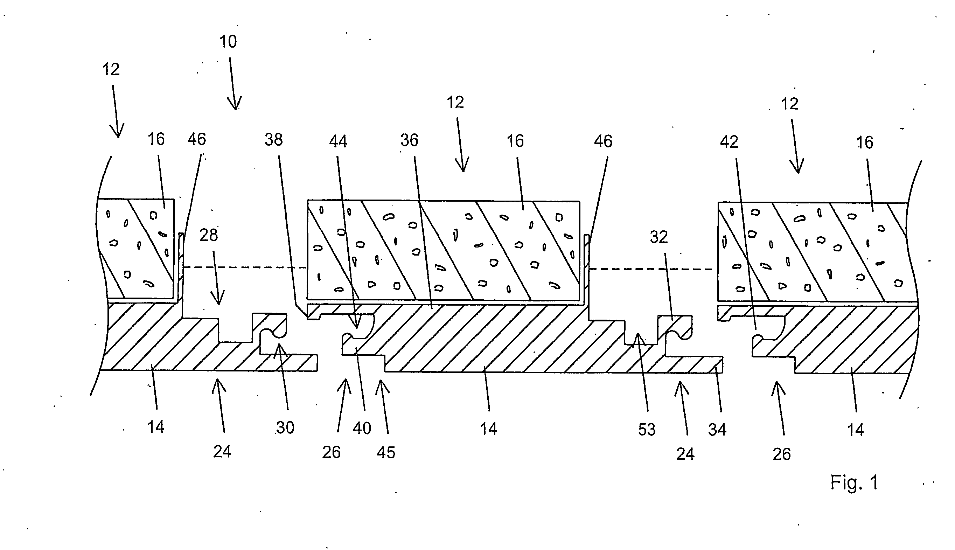

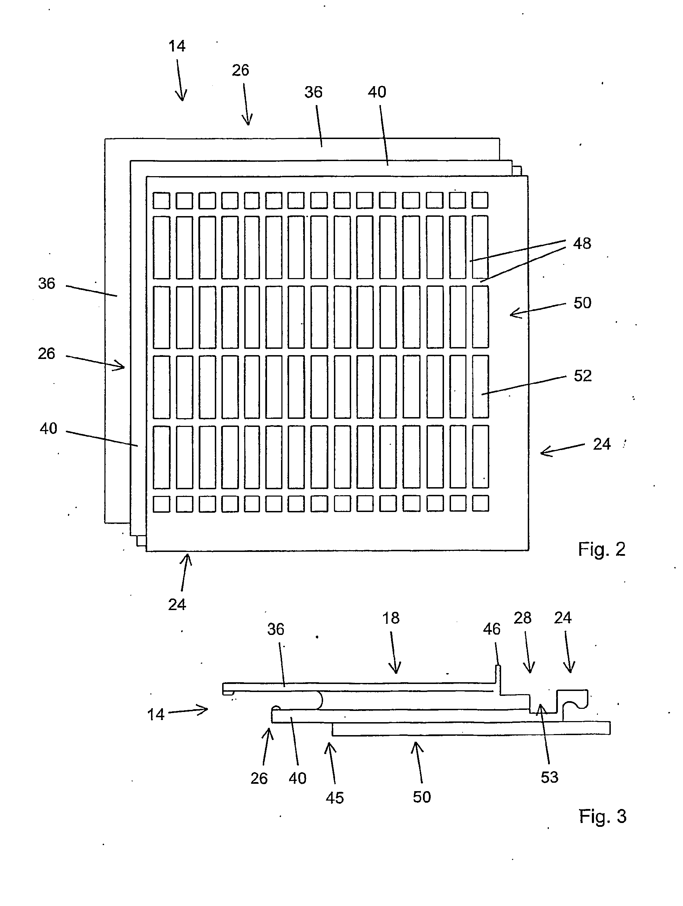

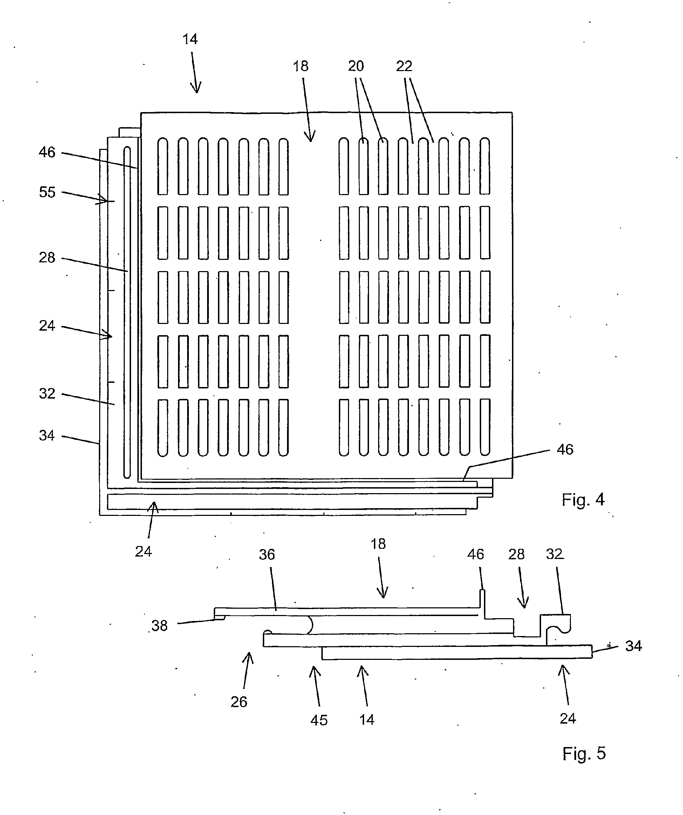

Referring to Figures 1 to 8, 16, 17, 21, and 24 to 27, a tiling system 10 in accordance with a first preferred embodiment of the invention includes a number of modular tiling elements 12, each comprising a substrate element 14 and a surface layer of cladding material, in the form of a tile 16, bonded to the substrate element.

Each substrate element 14 is a unitary moulded unit of a suitable material, even though it may appear from some of the drawings as if it has a four layer construction. The substrate element 14 can be made of a plastic material, metal, wood, composite, or other material that has substantial structural strength. In a preferred embodiment, the substrate element 14 is produced as a complete unit through injection moulding, from polystyrene or polyurethane. It can also be machined, cast or formed. If the cladding system 10 is required to be translucent, the substrate element 14 should be made of translucent material.

The substrate element 14 defines a generally planar, square face 18 onto which the tile 16 can be bonded with a suitable adhesive. A number of ribs 22 are defined on the face 18 to increase the structural strength of the face. A number of recesses 20 are defined between the ribs 22 and form air cavities, when a tile 16 is attached to the face 18. The air cavities assist in providing thermal insulation and also allow the bond between the tile 16 and face 18 to be severed, if the tile has to be removed from the tiling system 10, after installation, e.g. if the tile is broken or damaged.

The entire under surface of the tile 16 is adhesively bonded to the face 18 of the substrate element 14, which assists in automation of the bonding process, since no parts of the underside of the tile has to be kept free of adhesive.

The substrate element 14 has two edges that protrude beyond the face 18 and form utility flanges 24, on adjacent sides of the substrate element. Recesses 26 are defined along the other two edges of the substrate element that are recessed from the face 18. When adjacent tiling elements 12 are attached together in the tiling system 10, each utility flange 24 is received in the recess 26 of the adjacent tiling element, so that the tile 16 extends over the utility flange.

On each utility flange 24, a recess in the form of a longitudinal locking groove 28 is defined adjacent the face 18, and a recess in the form of a longitudinal adjustment groove 30 is defined along an edge of the flange. An upper tongue formation 32 has its base between the locking groove 28 and adjustment groove 30, and extends above the adjusting groove. A lower tongue 34 extends below the adjustment groove 30.

On the two edges of the substrate element 14 defining the recesses 26, an upper protuberance 36 extends to the edge of the tile 16 and defines the edge of the face 18 on its top. At the bottom of the edge of the upper protuberance 36, a longitudinal resilient clip formation 38 is defined, that is complementary to the locking groove 28. A recess tongue 40 extends laterally from the substrate element 14 in the recess 26 and defines a longitudinal protuberance 42 above its edge, the recess tongue 40 being complementary to the adjustment groove 30. A recess groove 44 is defined between the upper protuberance 36 and the recess tongue 40, and is complementary to the upper tongue 32. A further recess 45 is defined underneath the recess tongue 40, and is complementary to the lower tongue 34.

Each locking groove 28 and the clip formation 38 of the adjacent substrate element 14, together form a lockable set of attachment formations, while each adjustment groove 30 and the complementary protuberance 42 of the adjacent substrate element 14, together form an adjustable set of attachment formations.

The locking groove 28 has a width that is substantially more than the width of the clip formation 38 and is spaced laterally from the adjustment groove 30. The clip formation 38 and protuberance 42 are also spaced apart laterally, but are spaced apart further than the locking groove 28 and adjustment groove 30.

Two protective spacers 46 extend upwardly from the substrate element 14, between the face 18 and the utility flanges 24. When the tile 16 is bonded to the face 18, it is positioned in close abutment with the spacers 46, to protect the tile. The spacers 46 also define grout lines and act as axes during the installation process.

A plurality of rib formations 48 are defined in the underside 50 of the substrate element 14 in register with the upper ribs 22, to provide added structural strength. A plurality of recesses 52 are defined between the rib formations. The rib formations 48 and ribs 22 provide structural strength for the substrate element 14, especially when the substrate element has to bear compression working loads applied to the tile 16, while the recesses 52 provide thermal insulation.

The substrate element 14 lends strength to the tile 16, resulting in a reduced likelihood of damage to the tile during handling, transportation, installation, and use. The strength of the tiling element 12 is further enhanced by the scattered arrangement of attachment formations (i.e. spaced apart horezontally) by which adjacent tiling elements are attached together, and via which loads are transferred between adjacent tiling elements, for flexural strength of the tiling system 10.

A part of the locking groove 28 is deeper than the rest of the locking groove, and forms a utility groove 53, which can serve as a conduit for conductors of heating elements, or the like.

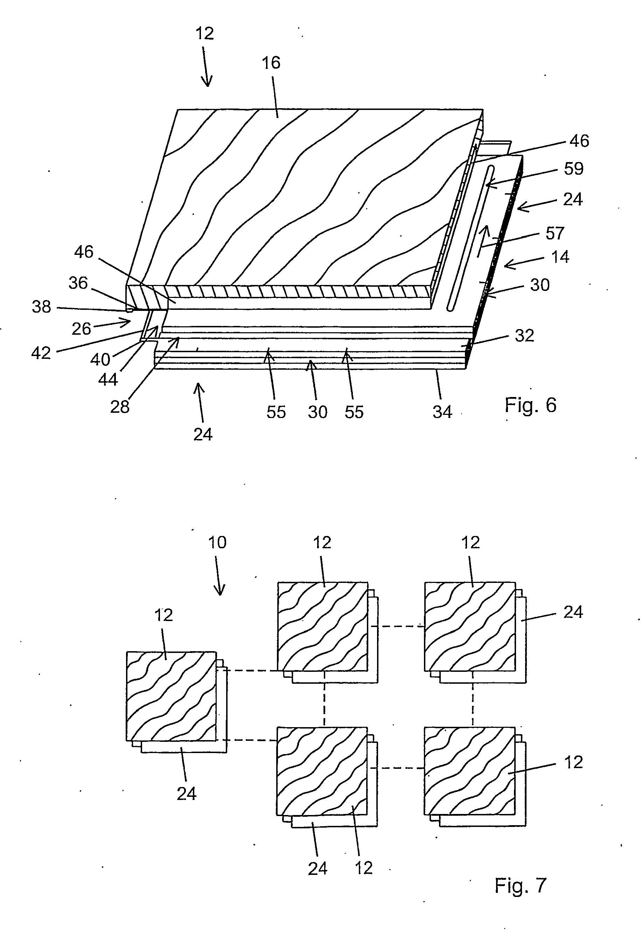

In use, when a support structure such as an existing wall, wooden or concrete floor, ceiling or roof, or a framework for a wall, floor, ceiling or roof, or the like, has to be clad with any suitable cladding material, such as tiles 16, a plurality of the modular tiling elements 12 are prepared by bonding the tiles 16 to the substrate elements 14. The tiling elements 12 are placed in a generally coplanar arrangement, as shown in Figure 7 of the drawings and are moved closer together in a side-by-side arrangement, with their edges in abutment. The orientation of the tiling elements 12 should all be the same, so that each utility flange 24 is brought into engagement with a recess 26 of the adjacent tiling element and so that the complementary formations of the utility flange and the recess can engage.

Adjacent tiling elements 12 can be in register, or can be staggered relative to each other. Markings 55 are provided on the utility flanges 24 that indicate fractions of the lengths of the tiles 16, i.e. the markings are provided at quarter and half positions along the edges of the tiles, to assist a user in positioning adjacent tiling elements 12 in a staggered orientation. As can be seen in Figure 6 of the drawings, further markings 57 are provided to indicate the direction of installation or to show the orientation of a surface pattern of the tile 16, or the like.

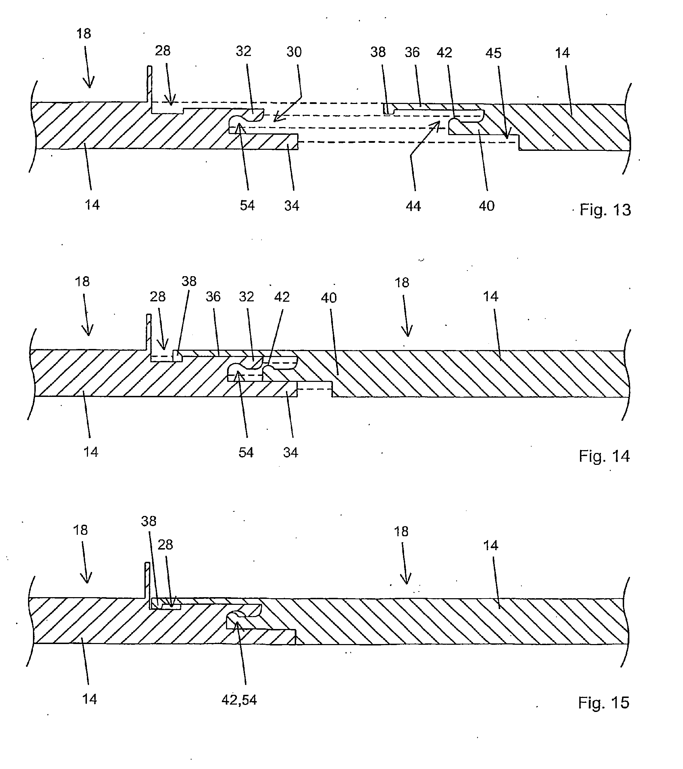

Referring to Figures 13 to 15 of the drawings, when the tiling elements 12 are moved into abutment, the clip formation 38 is first received in the locking groove 28. As can be seen in Figure 14 of the drawings, the upper protuberance 36 does not need to flex in any degree to allow the clip formation 38 to engage the locking groove 28, since the tiling element 12 defining the clip formation can be brought downwardly into engagement with the adjacent tiling element, with the recessed tongue 40 clearing the upper tongue 42. Once the lockable set of engagement formations, i.e. the clip formation 38 and locking groove 28, are engaged as shown in Figure 14 of the drawings, the tiling elements 12 are locked into engagement, but can move laterally relative to each other, with the clip formation 38 moving from side to side within the much wider locking groove 28.

Referring to Figure 15 of the drawings, the adjacent tiling elements 12 are moved closer together, so that the recess tongue 40 and protuberance 42 are received in the adjustment groove 30. At the same time, the upper tongue 32 is received in the recess groove 44 and the lower tongue 34 is received in the complementary recess 45 defined below the recess tongue 40 of the adjacent tiling element. The engagement of the respective tongues 32,40,34 and their complementary grooves 44,30,45 assist in keeping the tiling elements 12 in engagement, prevents the edges of the tiling elements from moving up or down relative to each other, holds the lockable and adjustable sets of attachment formations 28,38,42,54 in engagement, assists in distributing load bearing between adjacent structural elements 12, and provides stability when the tiling system 10 is supported on an uneven support structure.

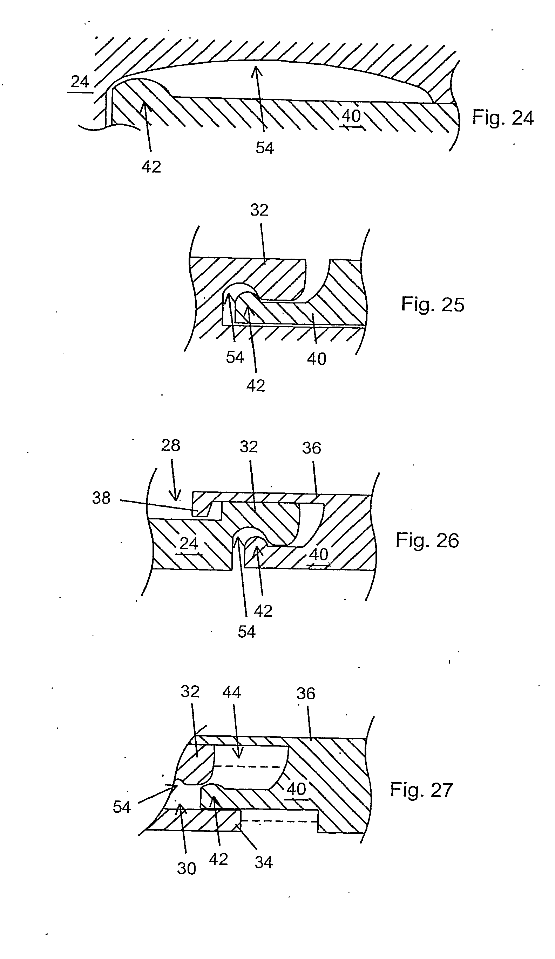

The engagement of the complementary attachment formations is better illustrated in Figures 24 to 27 of the drawings. A wide adjustment recess 54 is defined in the upper surface of the adjustment groove 30, in which the protuberance 42 is receivable. The adjustment recess 54 is much wider than the protuberance 42, so that the protuberance can be moved from side to side within the adjustment recess, thus allowing adjacent tiling elements 12 to move laterally relative to each other, while the protuberance 42 and adjustment recess 54 remain in adjustable engagement. However, the respective widths of the adjustment groove 30 and the recess tongue 40, including the respective heights of the adjustment recess 54 and the protuberance 42, are such that the protuberance is received in the adjustment recess with an interference fit. Adjacent tiling elements 12 are thus held tightly in a side-by-side position and, although they can move laterally relative to each other, the resistance of the interference fit between the protuberance 42 and adjustment recess 54 first has to be overcome, before they can move. They can also not be moved completely apart, as described above, as a result of the engagement of the clip formation 38 in the locking groove 28. The attachment of adjacent tiling elements 12 prevent unwanted shifting of the tiling elements 12 during installation, but can allow movement thereafter.

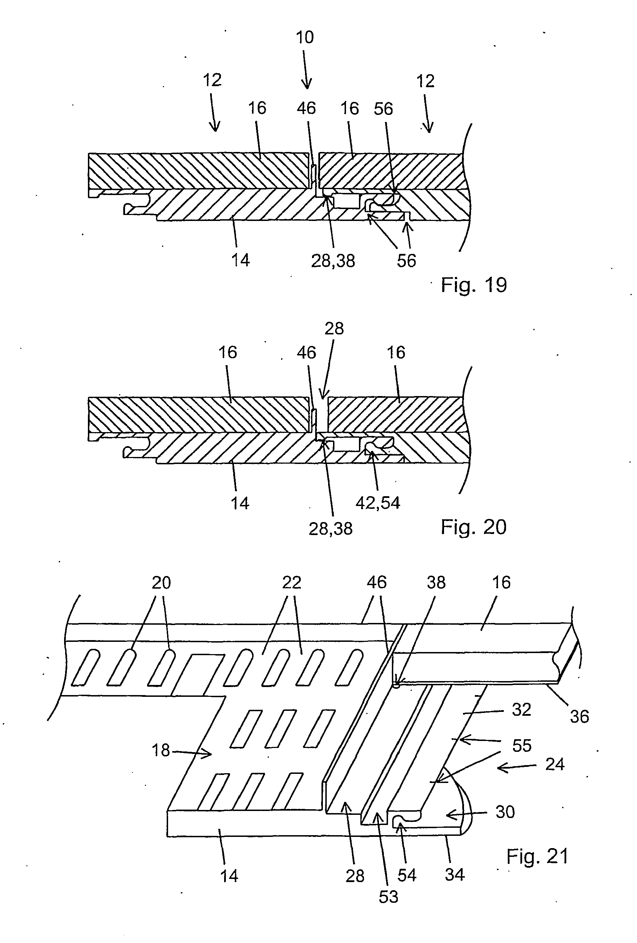

The tiles 16 that can be used in the tiling elements 12, can be of any suitable cladding material such as marble, granite or other stone tiles, glass, mirrors, plastics, a combination of these materials, or the like. However, in the case of some cladding materials, such as ceramic tiles, the cost of producing these tiles is substantially less if some variations in the dimensions of the tiles is permitted. The faces 18 of the substrate elements 14 are generally sized to have the same dimensions as standard rectangular or square tiles 16, but if a tile is slightly larger than the face, an edge of the tile will protrude beyond the end of the upper protuberance 36, as shown in Figure 19. In such a case, when the tiling element 12 including the oversize tile 16 is brought into engagement with the adjacent tiling element, the clip formation 38 will be received in the locking groove 28 and the protuberance 42 will be received in the adjustment recess 54, as described hereinabove, but a small space 56 will be left between the ends of the respective tongue formations 32,40,34 and their complementary groove formations 44, 30,45. It is to be appreciated that the oversized tile 16 can abut the spacer 46 closely, so that the spacing between the adjacent tiles 16 is not affected by the oversize of the tile.

Referring to Figure 20, if a tile 16 is smaller than the face 18, the upper protuberance 36 will protrude beyond the edge of the tile. When adjacent tiling elements 12 are installed, the clip formation 38 is received in the locking groove 28 and the protuberance 42 is received in the adjustment recess 50, as described hereinabove, with the substrate elements 14 of the adjacent tiling elements 12 abutting as closely together as they can, but a space 58 is left between the undersize tile 16 and the spacer 46. This space 58 can be filled up with a suitable filler, such as grout. The spaces between adjacent tiles 16, above the spacers, 46 in all the applications of the invention, can be filled with a suitable filler, such as grout, and the spacers 46 assist in providing relatively consistent gaps between the tiles, to be grouted.

When a tiller assembles the tiling system 10, each of the tiling elements 12 are brought into a close abutting relationship with adjacent tiling elements, and the lateral play between tiling elements allowed by the engagement of the protuberance 42 and the adjustment recess 54, is used to compensate for small variances in the dimensions of the tiles 16. Similarly, longitudinal movement between tiling elements 12 can be used to compensate for variations in the widths of tiles 16.

The tiling system 10 is designed to have sufficient structural strength to bear the loads of the tiles 16, which are supported on their entire undersides by the substrate elements 14, and any working loads that can be applied to the tiles. If desired, the tiling elements 12 can be attached to a support structure by fasteners such as nails that can extend through the utility flanges 24. The fasteners can be applied in the utility grooves 53 or in fastening slots 59 defined in the utility flanges, so that their heads are recessed within the utility grooves. However, if the tiling elements 12 are not so attached, they can move slightly relative to each other, as a result of the interference fit between the protuberances 42 and adjustment recesses 54, while being locked together by the engagement of the clip formations 38 in the locking grooves 28. The movement between the tiling elements 12 can allow them to compensate for movements in the supporting structure, such as thermal stress, moisture related deformation, structure ageing, and the like, thus avoiding the deformations from placing the tiles 16 under stress. It should be borne in mind that most tiles 16 are hard, but brittle, especially if they include imperfections and are thus susceptible to break, when placed under stress.

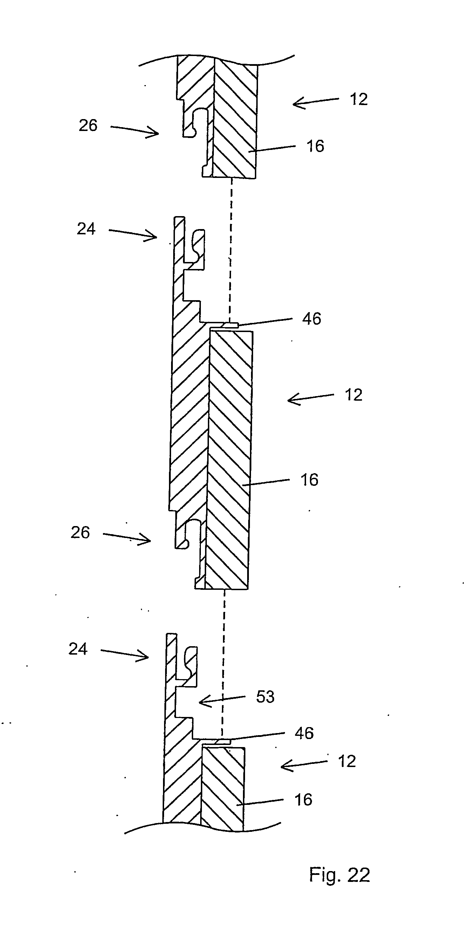

As shown in Figure 22, the tiling system 10 can be used in exterior cladding, to serve as so-called "siding" or when roofs are constructed. However, the tiling elements 12 should be installed with their utility flanges 24 extending upwardly, so that the water that impinges on the tiles 16 is prevented by gravity, from seeping between tiling elements 12 and is thus prevented from reaching the support structure covered by the substrate elements 14. The utility groove 53 further acts as a channel for water seepage direction and assists in draining water that may have entered between the tiles 16, so that the tiling system 10 provides a water and damp resistant cover to the underlying support structure, without the need for a damp resistant underlayment.

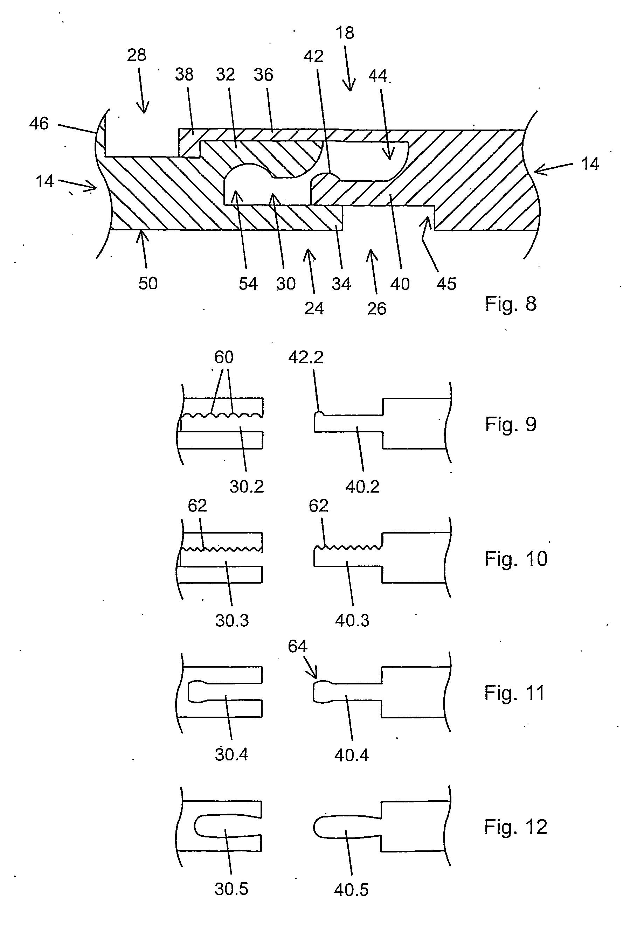

Referring to Figures 9 to 12, in the second, third, fourth and fifth preferred embodiments of the invention, respectively, alternative attachment formations in the adjustable set are shown, which can be used as substitutes for the protuberance 42 and the adjustment recess 54. Numerous other alternative attachment formations can be used without being limited by these illustrative examples. In the second preferred embodiment of the invention shown in Figure 9, a protuberance 42.2 is shown, which can engage with a plurality of complementary recesses 60, each of approximately the same width as the protuberance 42.2. In the third preferred embodiment of the invention shown in Figure 10, a number of tooth formations 62 are provided on the recess tongue 40.3, that can engage with corresponding tooth formations inside the adjusting groove 30.3. The fourth preferred embodiment of the invention shown in Figure 11, includes an enlarged edge 64 of the recess tongue 40.4 that is receivable in a complementary enlarged part of the adjusting groove 30.4. In the fifth preferred embodiment of the invention shown in Figure 12, the entire recess flange 40.5 has a rounded, widened appearance and is receivable in a complementary adjusting groove 30.5.

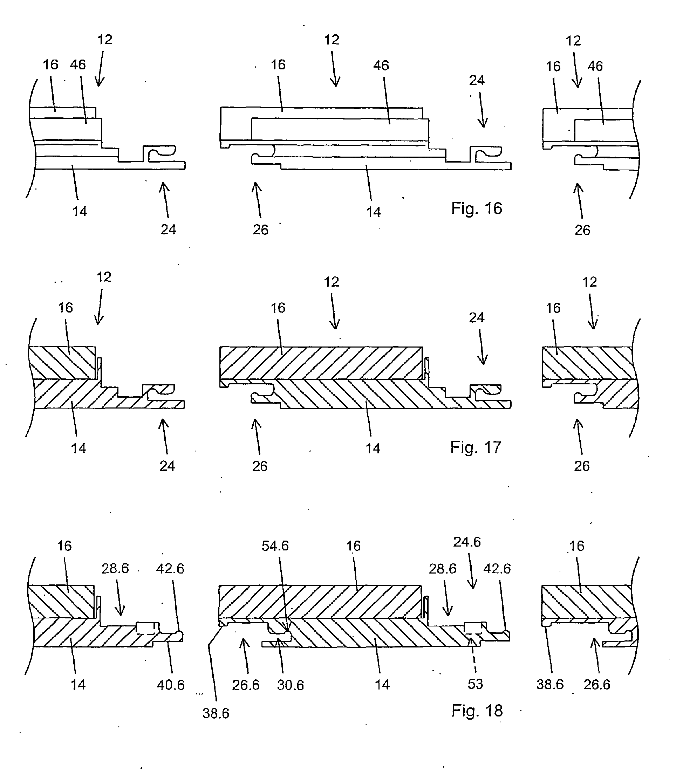

Referring to Figure 18, in a sixth preferred embodiment of the invention, the orientation of the recess tongue 40.6 and adjusting groove 30.6 has been inverted, but the engagement of the adjacent structural elements 12.6 is achieved in much the same way as in the first preferred embodiment of the invention.

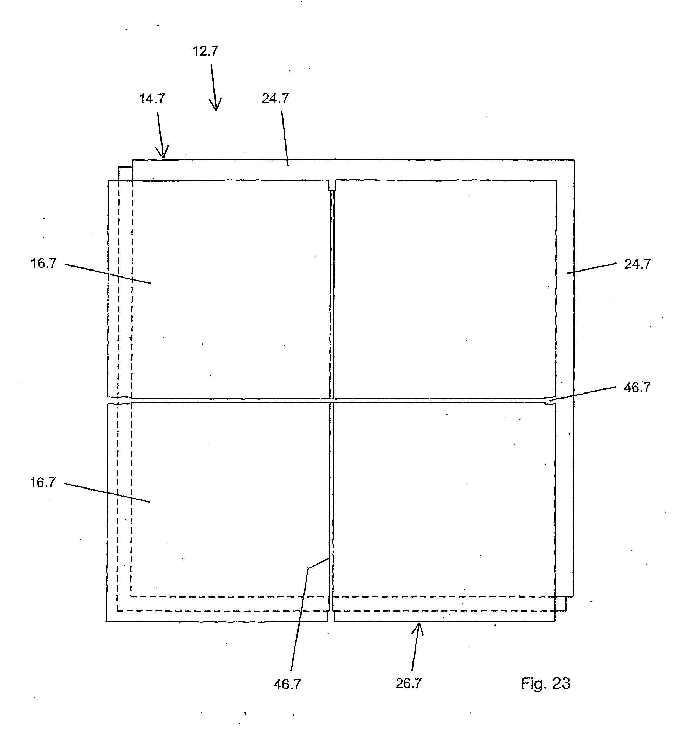

Referring to Figure 23, in a seventh preferred embodiment of the invention, a substrate element 14.7 is shown, that is the same as the substrate element of the first embodiment of the invention, except that four tiles 167 are bonded to the face of the substrate element, with spacers 46.7 extending between the tiles. It is to be appreciated that, while the invention has been described for use with rectangular or square tiles 16, it is equally applicable for any shape or size of tile, e.g. a tile that is quadrilateral or irregular in shape.

In another preferred embodiment of the invention, a plurality of tiling elements 12 are interlocked and checked or locked in along the perimeter by fastening elements to form an independent floor held down by its own weight. The invention thus allows for selective fastening of the tiling elements 12, which can be interlocked and free floating, or can be interlocked and fastened to its supporting structure.

In another preferred embodiment of the invention, the substrate element 14 of the tiling element 12 is made of a translucent material which, in combination with a translucent surface cladding material like onyx or glass, would result in a tiling module with translucent qualities.

In the preferred embodiments of the invention described above, the interlocking mechanisms of the substrate elements 14 protect the exposed flanges 24 of the substrate elements of complementary tiling modules. The interlocking mechanisms of the substrate layer secure the overlapping part of one tiling element 12 to the exposed overlapped flange 24 of a complementary tiling element by forming a clipping lock within the interlocking mechanism. The protection of each utility flange 24 by the adjacent tiling element 12, allows the utility groove 53 to remain functional after installation.

In the preferred embodiments of the invention described above, the interlocking mechanisms of the substrate elements 14 provide a manner of overlap between two complementary tiling elements 12 in order to create additional flexural strength in the tiling system 10, while the interlocking of tiling elements 12, gives the system increased load bearing strength.

It is an advantage of the invention illustrated, that an ordinary unskilled person is able to install the tiling system 10. Complementary tiling elements 12 can be installed in a flat position, as opposed to an angled position where an element is hinged, which creates installation problems. The preferred embodiments of the invention thus provide a tiling system which will eliminate costly labour, installation materials and processes.

The invention illustrated further holds the advantage of universal application without the need for modification, in that it provides for a standardised method of installation, irrespective of the particular application.

According to another preferred embodiment of the invention, the tiling modules can be detached and reinstalled at another location without damage.

## Claims

1. A substrate element (14) for a modular tiling element (12), said substrate element defining:
a generally planar face (18); and
at least two attachment formations (28,30) extending along at least one protruding edge of the substrate element, protruding beyond the face;
said substrate element being **characterised by**:
at least two attachment formations (38,40) extending along at least one recessed edge of the substrate element, recessed from the face,
the attachment formations on each protruding edge being complementary to the attachment formations on each recessed edge,
one attachment formation (28) on a protruding edge and its complementary attachment formation (38) on a recessed edge of an adjacent substrate element, being lockingly engagable to form a lockable set of attachment formations, and
one attachment formation (30) on a protruding edge and its complementary attachment formation (40) on a recessed edge of an adjacent substrate element, being slidingly engagable with an interference fit to form an adjustable set of attachment formations.

2. A substrate element (14) as claimed in Claim 1, **characterised in that** the complementary attachment formations (30,40) in an adjustable set include a recess (54) defined proximate an edge of one substrate element and a complementary protuberance (42), extending from an edge of the adjacent substrate element, the protuberance (42) being receivable in the recess formation (54) with an interference fit, but with play in a direction that is generally coplanar with at least one of the substrate elements.

3. A substrate element (14) as claimed in Claim 1 or Claim 2, **characterised in that** the complementary attachment formations (28,38) in a lockable set include a recess (28) defined proximate an edge of one substrate element and a complementary, resilient clip formation (38), extending from an edge of the adjacent substrate element, the clip formation being receivable in the recess in a clipping- fashion.

4. A substrate element (14) as claimed in Claim 3, insofar as it is dependent on Claim 2, **characterised in that** the protuberance (42) of the adjustable set and the clip formation (38) of the lockable set, are spaced apart with a groove (44) defined between them, and **in that** the recesses (28,54) of the adjustable set and the lockable set are similarly spaced apart with a tongue (32) extending between them, the tongue (32) being receivable in a pinching-fashion in the groove (44), when the adjustable set and lockable set of attachment formations engage.

5. A substrate element (14) as claimed in Claim 4, **characterised in that** the protuberance (42) of the adjustable set and the clip formation (38) of the lockable set, are spaced further apart than the recesses (28,54) of the adjustable set and the lockable set.

6. A substrate element (14) as claimed in Claim 1, **characterised in that** the face (18) has a rectangular outline and **in that** the substrate element (14) includes two protruding edges (24), protruding beyond the face on two sides of the substrate element, and two recessed edges (26), recessed from the edges of the face, on the two remaining sides of the substrate element.

7. A substrate element (14) as claimed in Claim 6, **characterised in that** each of the protruding edges (24) has the form of a flange.

8. A substrate element (14) as claimed in Claim 7, **characterised in that** a utility groove (53) is defined in at least one of the flanges (24).

9. A substrate element (14) as claimed in Claim 7 or Claim 8, **characterised in that** a fastening slot (59) is defined in at least one of the flanges (24).

10. A substrate element (14) as claimed in any one of the preceding claims, **characterised in that** a plurality of rib formations (22) and recesses (20) are defined on the face (18).

11. A substrate element (14) as claimed in any one of the preceding claims, **characterised in that** a plurality of rib formations (48) and recesses (52) are defined on an underside (50) of the substrate, opposite from the face (18).

12. A substrate element (14) as claimed in any one of Claims 1 to 9, **characterised in that** the substrate element has a solid construction, in which no holes are defined.

13. A substrate element (14) as claimed in any one of the preceding claim, **characterised by** at least one spacer (46), protruding from the substrate element, between the face (18) and a protruding edge of the substrate element, generally perpendicularly to the face.

14. A substrate element (14) as claimed in any one of the preceding claims, **characterised in that** the substrate element includes at least one marking (55), disposed at a location corresponding a fraction of the length of the face (18).

15. A substrate element (14) as claimed in any one of the preceding claims, **characterised in that** the substrate element includes at least one marking (57), corresponding to a laying direction of the substrate element.

16. A modular tiling element (12) comprising a substrate element (14) and a surface layer of cladding material (16) bonded to the substrate element, **characterised in that** the substrate element is a substrate element as claimed in any one of Claims 1 to 15, and **in that** the surface layer is bonded to the face 18 of the substrate element.

17. A tiling element (12) as claimed in Claim 16, **characterised in that** the surface layer (16) of cladding material and the face (18) of the substrate element (14) are of the same general size and are bonded together, generally in register.

18. A tiling element (12) as claimed in Claim 16 or Claim 17, **characterised in that** the cladding material (16) comprises a ceramic tile.

19. A tiling element (12) as claimed in Claim 16 or Claim 17, **characterised in that** the cladding material (16) comprises a stone tile.

20. A tiling element (12) as claimed in any one of Claims 16 to 19, **characterised in that** the bonding between the cladding material (16) and the face (18) of the substrate element (14) is complete.

21. A method of tiling, said method comprising:
preparing modular tiling elements (12) by bonding surface layers of cladding material (16) to substrate elements (14) as claimed in any one of Claims 1 to 15:
moving the tiling elements (12) into a side-by-side arrangement with their edges in abutment; and
engaging complementary formations (28,38,30,40) defined on the edges of adjacent tiling elements;
**characterised in that** a lockable set (28,38) of the complementary engagement formations lock the edges of adjacent tiling elements together, and an adjustable set (30,40) of the complementary engagement formations engage with a slidable interference fit, allowing relative movement between adjacent tiling elements, generally along the common plane of the tiling elements, while the complementary formations remain in engagement.

22. A method as claimed in Claim 21, **characterised in that** the substrate elements (14) are attached to a support structure.

23. A method as claimed in Claim 22, **characterised in that** the substrate elements (14) are attached to the support structure by fasteners extending through flanges (24) of the substrate elements, protruding beyond edges of the surface layer of cladding material (16).

24. A method as claimed in Claim 22, **characterised in that** the substrate elements (14) are interlocked and free floating on the support structure.

25. A tiling system (10) laid by preparing modular tiling elements (12) by bonding surface layers of cladding material (16) to substrate elements (14); moving the tiling elements (12) into a side-by-side arrangement with their edges in abutment; and engaging complementary formations defined on the edges of adjacent tiling elements; wherein a lockable set (28,38) of the complementary engagement formations lock the edges of adjacent tiling elements together, and an adjustable set (30,40) of the complementary engagement formations engage with a slidable interference fit, allowing relative movement between adjacent tiling elements, generally along the common plane of the tiling elements, while the complementary formations remain in engagement, wherein the tiling system comprises tiling elements (12) as claimed in any one of Claims 16 to 20.

26. A system (10) as claimed in Claim 25, **characterised in that** the upper faces of the surface layers (16) of adjacent tiling elements (12) are aligned to provide a smooth surface.

27. A system of interlocking mechanisms, defined on the flanges (24) of substrate elements (14) for modular tiling elements (12), each of said substrate elements defining a generally planar face (18), at least two attachment formations (28,30) extending along at least one protruding edge of the substrate element, protruding beyond the face; and at least two attachment formations (38,40) extending along at least one recessed edge of the substrate element, recessed from the face, the attachment formations on each protruding edge being complementary to the attachment formations on each recessed edge, wherein one attachment formation (28) on a protruding edge and its complementary attachment formation (38) on a recessed edge of an adjacent substrate element, are lockingly engagable to form a lockable set of attachment formations, and one attachment formation (30) on a protruding edge and its complementary attachment formation (40) on a recessed edge of an adjacent substrate element, are slidingly engagable with an interference fit to form an adjustable set of attachment formations, wherein the face (18) has a rectangular outline and the substrate element (14) includes two protruding edges in the form of flanges (24), protruding beyond the face on two sides of the substrate element, and two recessed edges (26), recessed from the edges of the face, on the two remaining sides of the substrate element, wherein the engagement of the attachment formations (28,30,38,40) of adjacent substrate elements allow the substrate elements to move longitudinally and transversely to the engaged attachment formations.

28. A system as claimed in Claim 27, **characterised in that** the engagement of the attachment formations (28,30,38,40) form a pincher lock.

## Patentansprüche

1. Trägerelement (14) für ein modulares Fliesenelement (12), wobei das genannte Trägerelement Folgendes definiert:
eine allgemein planare Seitenfläche (18); und
wenigstens zwei Anbringungsgebilde (28, 30), die an wenigstens einem vorspringenden Rand des Trägerelements entlang verlaufen, der über die Seitenfläche hinaus vorspringt;
wobei das genannte Trägerelement **dadurch gekennzeichnet ist, dass**:
wenigstens zwei Anbringungsgebilde (38, 40) an wenigstens einem ausgesparten Rand des Trägerelements entlang verlaufen, der von der Seitenfläche zurückspringt,
die Anbringungsgebilde an jedem vorspringenden Rand mit den Anbringungsgebilden an jedem ausgesparten Rand komplementär sind,
ein Anbringungsgebilde (28) an einem vorspringenden Rand und sein komplementäres Anbringungsgebilde (38) an einem ausgesparten Rand eines angrenzenden Trägerelements miteinander rastend in Eingriff gebracht werden können zum Bilden eines feststellbaren Satzes von Anbringungsgebilden, und
ein Anbringungsgebilde (30) an einem vorspringenden Rand und sein komplementäres Anbringungsgebilde (40) an einem ausgesparten Rand eines angrenzenden Trägerelements verschiebbar mit einer Presspassung miteinander in Eingriff gebracht werden können zum Bilden eines verstellbarenden Satzes von Anbringungsgebilden.

2. Trägerelement (14) nach Anspruch 1, **dadurch gekennzeichnet, dass** die komplementären Anbringungsgebilde (30, 40) in einem verstellbaren Satz eine Aussparung (54), die nahe einem Rand eines Trägerelements definiert ist, und einen komplementären Vorsprung (42), der sich von einem Rand des angrenzenden Trägerelements erstreckt, aufweisen, wobei der Vorsprung (42) mit einer Presspassung, aber mit Spiel in einer Richtung, die allgemein mit wenigstens einem der Trägerelemente komplanar ist, in dem Aussparungsgebilde (54) aufnehmbar ist.

3. Trägerelement (14) nach Anspruch 1 oder Anspruch 2, **dadurch gekennzeichnet, dass** die komplementären Anbringungsgebilde (28, 38) in einem feststellbaren Satz eine Aussparung (28), die nahe einem Rand eines Trägerelements definiert ist, und ein komplementäres federndes Klammergebilde, das sich von einem Rand des angrenzenden Trägerelements erstreckt, aufweisen, wobei das Klammergebilde klammernd in der Aussparung aufnehmbar ist.

4. Trägerelement (14) nach Anspruch 3, sofern er von Anspruch 2 abhängig ist, **dadurch gekennzeichnet, dass** der Vorsprung (42) des verstellbaren Satzes und das Klammergebilde (38) des feststellbaren Satzes voneinander beabstandet sind, wobei zwischen ihnen eine Nut (44) definiert ist, und dass die Aussparungen (28, 54) des verstellbaren Satzes und des feststellbaren Satzes desgleichen voneinander beabstandet sind, wobei zwischen ihnen ein Spund (32) verläuft, wobei der Spund (32) klemmend in der Nut (44) aufnehmbar ist, wenn der verstellbare Satz und der feststellbare Satz von Anbringungsgebilden miteinander in Eingriff gebracht werden.

5. Trägerelement (14) nach Anspruch 4, **dadurch gekennzeichnet, dass** der Vorsprung (42) des verstellbaren Satzes und das Klammergebilde (38) des feststellbaren Satzes weiter voneinander beabstandet sind als die Aussparungen (28, 54) des verstellbaren Satzes und des feststellbaren Satzes.

6. Trägerelement (14) nach Anspruch 1, **dadurch gekennzeichnet, dass** die Seitenfläche (18) einen rechteckigen Umriss hat und dass das Trägerelement (14) zwei vorspringende Ränder (24), die an zwei Seiten des Trägerelements über die Seitenfläche hinaus vorspringen, und zwei ausgesparte Ränder (26), die an den übrigen zwei Seiten des Trägerelements von den Rändern der Seitenfläche zurückspringen, aufweist.

7. Trägerelement (14) nach Anspruch 6, **dadurch gekennzeichnet, dass** jeder der vorspringenden Ränder (24) die Form eines Flansches hat.

8. Trägerelement (14) nach Anspruch 7, **dadurch gekennzeichnet, dass** in wenigstens einem der Flansche (24) eine Leitungsnut (53) definiert ist.

9. Trägerelement (14) nach Anspruch 7 oder Anspruch 8, **dadurch gekennzeichnet, dass** in wenigstens einem der Flansche (24) ein Befestigungsschlitz (59) definiert ist.

10. Trägerelement (14) nach einem der vorhergehenden Ansprüche, **dadurch gekennzeichnet, dass** an der Seitenfläche (18) mehrere Rippengebilde (22) und Aussparungen (20) definiert sind.

11. Trägerelement (14) nach einem der vorhergehenden Ansprüche, **dadurch gekennzeichnet, dass** an einer Unterseite (50) des Trägers, entgegengesetzt der Seitenfläche (18), mehrere Rippengebilde (48) und Aussparungen (52) definiert sind.

12. Trägerelement (14) nach einem der Ansprüche 1 bis 9, **dadurch gekennzeichnet, dass** das Trägerelement einen festen Aufbau hat, in dem keine Löcher definiert sind.

13. Trägerelement (14) nach einem der vorhergehenden Ansprüche, **dadurch gekennzeichnet, dass** zwischen der Seitenfläche (18) und einem vorspringenden Rand des Trägerelements wenigstens ein Abstandhalter (46) allgemein lotrecht zu der Seitenfläche aus dem Trägerelement ragt.

14. Trägerelement (14) nach einem der vorhergehenden Ansprüche, **dadurch gekennzeichnet, dass** das Trägerelement wenigstens eine Markierung (55) aufweist, die an einer Stelle angeordnet ist, die einem Bruchteil der Länge der Seitenfläche (18) entspricht.

15. Trägerelement (14) nach einem der vorhergehenden Ansprüche, **dadurch gekennzeichnet, dass** das Trägerelement wenigstens eine Markierung (57) aufweist, die einer Verlegerichtung des Trägerelements entspricht.

16. Modulares Fliesenelement (12), umfassend ein Trägerelement (14) und eine Oberflächenlage aus Verkleidungsmaterial (16), die mit dem Trägerelement verbunden ist, **dadurch gekennzeichnet, dass** das Trägerelement ein Trägerelement nach einem der Ansprüche 1 bis 15 ist und dass die Oberflächenlage mit der Seitenfläche 18 des Trägerelements verbunden ist.

17. Fliesenelement (12) nach Anspruch 16, **dadurch gekennzeichnet, dass** die Oberflächenlage (16) aus Verkleidungsmaterial und die Seitenfläche (18) des Trägerelements (14) die gleiche allgemeine Größe haben und allgemein deckungsgleich miteinander verbunden sind.

18. Fliesenelement (12) nach Anspruch 16 oder Anspruch 17, **dadurch gekennzeichnet, dass** das Verkleidungsmaterial (16) eine Keramikfliese umfasst.

19. Fliesenelement (12) nach Anspruch 16 oder Anspruch 17, **dadurch gekennzeichnet, dass** das Verkleidungsmaterial (16) eine Steinfliese umfasst.

20. Fliesenelement (12) nach einem der Ansprüche 16 bis 19, **dadurch gekennzeichnet, dass** die Bindung zwischen dem Verkleidungsmaterial (16) und der Seitenfläche (18) des Trägerelements (14) vollständig ist.

21. Fliesenlegeverfahren, wobei das genannte Verfahren Folgendes umfasst:
Anfertigen von modularen Fliesenelementen (12) durch Verbinden von Oberflächenlagen aus Verkleidungsmaterial (16) mit Trägerelementen (14) nach einem der Ansprüche 1 bis 15;
Bewegen der Fliesenelemente (12) in eine nebeneinanderliegende Anordnung, wobei ihre Rändern aneinander in Anlage sind; und
Ineingriffbringen von komplementären Gebilden (28, 38, 30, 40), die an den Rändern von aneinander angrenzenden Fliesenelementen definiert sind;
**dadurch gekennzeichnet, dass** ein feststellbarer Satz (28, 38) der komplementären Eingriffsgebilde die Ränder von aneinander angrenzenden Fliesenelementen miteinander verrastet und ein verstellbarer Satz (30, 40) der komplementären Eingriffsgebilde mit einer verschiebbaren Presspassung in Eingriff gebracht wird, die allgemein entlang der gemeinsamen Ebene der Fliesenelemente relative Bewegung zwischen aneinander angrenzenden Fliesenelementen zulässt, während die komplementären Gebilde miteinander in Eingriff bleiben.

22. Verfahren nach Anspruch 21, **dadurch gekennzeichnet, dass** die Trägerelemente (14) an einer Tragkonstruktion angebracht sind.

23. Verfahren nach Anspruch 22, **dadurch gekennzeichnet**, das die Trägerelemente (14) mit Befestigungselementen an der Tragkonstruktion angebracht sind, die durch Flansche (24) der Trägerelemente verlaufen, die über Ränder der Oberflächenlage aus Verkleidungsmaterial (16) hinaus vorspringen.

24. Verfahren nach Anspruch 22, **dadurch gekennzeichnet**, das die Trägerelemente (14) fest zusammengefügt und auf der Tragkonstruktion frei schwimmend sind.

25. Fliesensystem (10), das verlegt wird, indem modulare Fliesenelemente (12) angefertigt werden, indem Oberflächenlagen aus Verkleidungsmaterial (16) mit Trägerelementen (14) verbunden werden; die Fliesenelemente (12) in eine nebeneinanderliegende Anordnung mit aneinander in Anlage befindlichen Rändern bewegt werden; und an den Rändern von aneinander angrenzenden Fliesenelementen definierte, komplementäre Gebilde miteinander in Eingriff gebracht werden; wobei ein feststellbarer Satz (28, 38) der komplementären Eingriffsgebilde die Ränder von aneinander angrenzenden Fliesenelementen miteinander verrastet und ein verstellbarer Satz (30, 40) der komplementären Eingriffsgebilde mit einer verschiebbaren Presspassung in Eingriff gebracht wird, die allgemein entlang der gemeinsamen Ebene der Fliesenelemente relative Bewegung zwischen aneinander angrenzenden Fliesenelementen zulässt, während die komplementären Gebilde miteinander in Eingriff bleiben, wobei das Fliesensystem Fliesenelemente (12) nach einem der Ansprüche 16 bis 20 umfasst.

26. System (10) nach Anspruch 25, **dadurch gekennzeichnet, dass** die Oberseiten der Oberflächenlagen (16) von aneinander angrenzenden Fliesenelementen (12) aufeinander ausgerichtet sind, um eine glatte Oberfläche bereitzustellen.

27. System von ineinandergreifenden Mechanismen, die an den Flanschen (24) von Trägerelementen (14) für modulare Fliesenelemente (12) definiert sind, wobei jedes der genannten Trägerelemente eine allgemein planare Seitenfläche (18), wenigstens zwei Anbringungsgebilde (28, 30), die entlang wenigstens einem vorspringenden Rand des Trägerelements verlaufen, der über die Seitenfläche hinaus vorspringt; und wenigstens zwei Anbringungsgebilde (38, 40), die an wenigstens einem ausgesparten Rand des Trägerelements entlang verlaufen, der von der Seitenfläche zurückspringt, definiert, wobei die Anbringungsgebilde an jedem vorspringenden Rand mit den Anbringungsgebilden an jedem ausgesparten Rand komplementär sind, wobei ein Anbringungsgebilde (28) an einem vorspringenden Rand und sein komplementäres Anbringungsgebilde (38) an einem ausgesparten Rand eines angrenzenden Trägerelements miteinander verrastend in Eingriff gebracht werden können zum Bilden eines feststellbaren Satzes von Anbringungsgebilden und ein Anbringungsgebilde (30) an einem vorspringenden Rand und sein komplementäres Anbringungsgebilde (40) an einem ausgesparten Rand eines angrenzenden Trägerelements verschiebbar mit einer Presspassung miteinander in Eingriff gebracht werden können zum Bilden eines verstellbarenden Satzes von Anbringungsgebilden, wobei die Seitenfläche (18) einen rechteckigen Umriss hat und das Trägerelement (14) zwei vorspringende Ränder in der Form von Flanschen (24), die an zwei Seiten des Trägerelements über die Seitenfläche hinaus vorspringen, und zwei von den Rändern der Seitenfläche zurückspringende ausgesparte Ränder (26) an den übrigen zwei Seiten des Trägerelements, aufweist, wobei der Eingriff der Anbringungsgebilde (28, 30, 38, 40) von aneinander angrenzenden Trägerelementen die Trägerelemente sich längs und quer zu den in Eingriff gebrachten Anbringungsgebilden bewegen lässt.

28. System nach Anspruch 27, **dadurch gekennzeichnet, dass** der Eingriff der Anbringungsgebilde (28, 30, 38, 40) eine klemmende Spundung bildet.

## Revendications

1. Elément de substrat (14) pour un élément de carrelage modulaire (12), ledit élément de substrat définissant :
une face généralement plane (18) ; et
au moins deux formations de fixation (28, 30) s'étirant le long d'au moins un bord en saillie de l'élément de substrat, saillant au-delà de la face ;
ledit élément de substrat étant **caractérisé par** :
au moins deux formations de fixation (38, 40) s'étirant le long d'au moins un bord en retrait de l'élément de substrat, en retrait par rapport à la face ;
les formations de fixation sur chaque bord en saillie étant complémentaires aux formations de fixation sur chaque bord en retrait,
une formation de fixation (28) sur un bord en saillie et sa formation de fixation complémentaire (38) sur un bord en retrait d'un élément de substrat adjacent, pouvant être mises en prise de manière verrouillable pour former un ensemble verrouillable de formations de fixation, et
une formation de fixation (30) sur un bord en saillie et sa formation de fixation complémentaire (40) sur un bord en retrait d'un élément de substrat adjacent, pouvant être mises en prise de manière coulissante avec un ajustement avec serrage pour former un ensemble ajustable de formations de fixation.

2. Elément de substrat (14) tel que revendiqué à la Revendication 1, **caractérisé en ce que** les formations de fixation complémentaires (30, 40) dans un ensemble ajustable incluent un retrait (54) défini à proximité d'un bord d'un élément de substrat et une protubérance complémentaire (42), s'étirant à partir d'un bord de l'élément de substrat adjacent, la protubérance (42) pouvant être reçue dans la formation en retrait (54) avec un ajustement avec serrage, mais avec du jeu dans une direction qui est généralement coplanaire avec au moins un des éléments de substrat.

3. Elément de substrat (14) tel que revendiqué à la Revendication 1 ou Revendication 2, **caractérisé en ce que** les formations de fixation complémentaires (28, 38) dans un ensemble verrouillable incluent un retrait (28) défini à proximité d'un bord d'un élément de substrat et une formation de clip élastique complémentaire (38), s'étirant à partir d'un bord de l'élément de substrat adjacent, la formation de clip pouvant être reçue dans le retrait par clipsage.

4. Elément de substrat (14) tel que revendiqué à la Revendication 3, dans la mesure où elle dépend de la Revendication 2, **caractérisé en ce que** la protubérance (42) de l'ensemble ajustable et la formation de clip (38) de l'ensemble verrouillable sont espacées par une gorge (44) définie entre elles, et **en ce que** les retraits (28, 54) de l'ensemble ajustable et l'ensemble verrouillable sont espacés de manière similaire par une languette (32) s'étirant entre eux, la languette (32) pouvant être reçue par pincement dans la gorge (44), lorsque l'ensemble ajustable et l'ensemble verrouillable de formations de fixation se mettent en prise.

5. Elément de substrat (14) tel que revendiqué à la Revendication 4, **caractérisé en ce que** la protubérance (42) de l'ensemble ajustable et la formation de clip (38) de l'ensemble verrouillable sont plus espacées que les retraits (28, 54) de l'ensemble ajustable et l'ensemble verrouillable.

6. Elément de substrat (14) tel que revendiqué à la Revendication 1, **caractérisé en ce que** la face (18) a un pourtour rectangulaire et **en ce que** l'élément de substrat (14) inclut deux bords en saillie (24), saillant au-delà de la face sur deux côtés de l'élément de substrat et deux bords en retrait (26), en retrait par rapport aux bords de la face, sur les deux côtés restants de l'élément de substrat.

7. Elément de substrat (14) tel que revendiqué à la Revendication 6, **caractérisé en ce que** chacun des bords en saillie (24) a la forme d'une bride.

8. Elément de substrat (14) tel que revendiqué à la Revendication 7, **caractérisé en ce qu'**une gorge pour les services publics (53) est définie dans au moins une des brides (24).

9. Elément de substrat (14) tel que revendiqué à la Revendication 7 ou Revendication 8, **caractérisé en ce qu'**une fente de fixation (59) est définie dans au moins une des brides (24).

10. Elément de substrat (14) tel que revendiqué dans une quelconque des revendications précédentes, **caractérisé en ce qu'**une pluralité de formations de côte (22) et de retraits (20) est définie sur la face (18).

11. Elément de substrat (14) tel que revendiqué dans une quelconque des revendications précédentes, **caractérisé en ce qu'**une pluralité de formations de côte (48) et de retraits (52) est définie sur un dessous (50) du substrat, à l'opposé de la face (18).

12. Elément de substrat (14) tel que revendiqué dans une quelconque des Revendications 1 à 9, **caractérisé en ce que** l'élément de substrat a une construction solide, dans laquelle aucun trou n'est défini.

13. Elément de substrat (14) tel que revendiqué dans une quelconque des revendications précédentes, **caractérisé par** au moins une entretoise (46), saillant à partir de l'élément de substrat, entre la face (18) et un bord en saillie de l'élément de substrat, généralement perpendiculaire à la face.

14. Elément de substrat (14) tel que revendiqué dans une quelconque des revendications précédentes, **caractérisé en ce que** l'élément de substrat inclut au moins un marquage (55), disposé à un emplacement correspondant à une fraction de la longueur de la face (18).

15. Elément de substrat (14) tel que revendiqué dans une quelconque des revendications précédentes, **caractérisé en ce que** l'élément de substrat inclut au moins un marquage (57), correspondant à une direction de pose de l'élément de substrat.

16. Elément de carrelage modulaire (12) comprenant un élément de substrat (14) et une couche de surface de matériau de revêtement (16) collée à l'élément de substrat, **caractérisé en ce que** l'élément de substrat est un élément de substrat tel que revendiqué dans une quelconque des Revendications 1 à 15 et **en ce que** la couche de surface est collée à la face 18 de l'élément de substrat.

17. Elément de carrelage (12) tel que revendiqué à la Revendication 16, **caractérisé en ce que** la couche de surface (16) de matériau de revêtement et la face (18) de l'élément de substrat (14) sont de la même taille générale et sont collées ensemble, généralement par superposition.

18. Elément de carrelage (12) tel que revendiqué à la Revendication 16 ou Revendication 17, **caractérisé en ce que** le matériau de revêtement (16) comprend un carreau de céramique.

19. Elément de carrelage (12) tel que revendiqué à la Revendication 16 ou Revendication 17, **caractérisé en ce que** le matériau de revêtement (16) comprend un carreau de pierre.

20. Elément de carrelage (12) tel que revendiqué dans une quelconque des Revendications 16 à 19, **caractérisé en ce que** le collage entre le matériau de revêtement (16) et la face (18) de l'élément de substrat (14) est complet.

21. Procédé de carrelage, ledit procédé consistant à :
préparer des éléments de carrelage modulaires (12) en collant des couches de surface de matériau de revêtement (16) à des éléments de substrat (14) tels que revendiqués dans une quelconque des Revendications 1 à 15 ;
déplacer les éléments de carrelage (12) dans une disposition côte à côte avec leurs bords en appui ; et
mettre en prise des formations complémentaires (28, 38, 30, 40) définies sur les bords d'éléments de carrelage adjacents ;
**caractérisé en ce qu'**un ensemble verrouillable (28, 38) des formations de mise en prise complémentaires verrouille ensemble les bords d'éléments de carrelage adjacents, et un ensemble ajustable (30, 40) des formations de mise en prise complémentaires se met en prise avec un ajustement avec serrage coulissable, permettant un mouvement relatif entre des éléments de carrelage adjacents, généralement le long du plan commun des éléments de carrelage, tandis que les formations complémentaires restent en prise.

22. Procédé tel que revendiqué à la Revendication 21, **caractérisé en ce que** les éléments de substrat (14) sont fixés à une structure de support.

23. Procédé tel que revendiqué à la Revendication 22, **caractérisé en ce que** les éléments de substrat (14) sont fixés à la structure de support par des éléments de fixation s'étirant à travers des brides (24) des éléments de substrat, saillant au-delà des bords de la couche de surface de matériau de revêtement (16).

24. Procédé tel que revendiqué à la Revendication 22, **caractérisé en ce que** les éléments de substrat (14) sont interverrouillés et flottent librement sur la structure de support.

25. Système de carrelage (10) posé en préparant des éléments de carrelage modulaires (12) en collant des couches de surface de matériau de revêtement (16) à des éléments de substrat (14) ; en déplaçant les éléments de carrelage (12) dans une disposition côte à côte avec leurs bords en appui ; et en mettant en prise des formations complémentaires définies sur les bords d'éléments de carrelage adjacents ; où un ensemble verrouillable (28, 38) des formations de mise en prise complémentaires verrouille ensemble les bords d'éléments de carrelage adjacents, et un ensemble ajustable (30, 40) des formations de mise en prise complémentaires se met en prise avec un ajustement avec serrage coulissable, permettant un mouvement relatif entre des éléments de carrelage adjacents, généralement le long du plan commun des éléments de carrelage, tandis que les formations complémentaires restent en prise, où le système de carrelage comprend des éléments de carrelage (12) tels que revendiqués dans une quelconque des Revendications 16 à 20.

26. Système (10) tel que revendiqué dans la Revendication 25, **caractérisé en ce que** les faces supérieures des couches de surface (16) d'éléments de carrelage adjacents (12) sont alignées pour fournir une surface lisse.

27. Système de mécanismes d'interverrouillage, défini sur les brides (24) d'éléments de substrat (14) pour des éléments de carrelage modulaires (12), chacun desdits éléments de substrat définissant une face généralement planaire (18), au moins deux formations de fixation (28, 30) s'étirant le long d'au moins un bord en saillie de l'élément de substrat, saillant au-delà de la face ; et au moins deux formations de fixation (38, 40) s'étirant le long d'au moins un bord en retrait de l'élément de substrat, en retrait par rapport à la face, les formations de fixation sur chaque bord en saillie étant complémentaires aux formations de fixation sur chaque bord en retrait, où une formation de fixation (28) sur un bord en saillie et sa formation de fixation complémentaire (38) sur un bord en retrait d'un élément de substrat adjacent peuvent être mises en prise de manière verrouillable pour former un ensemble verrouillable de formations de fixation, et une formation de fixation (30) sur un bord en saillie et sa formation de fixation complémentaire (40) sur un bord en retrait d'un élément de substrat adjacent peuvent être mises en prise de manière coulissante avec un ajustement avec serrage pour former un ensemble ajustable de formations de fixation, où la face (18) a un pourtour rectangulaire et l'élément de substrat (14) inclut deux bords en saillie sous forme de brides (24), saillant au-delà de la face sur deux côtés de l'élément de substrat, et deux bords en retrait (26), en retrait par rapport aux bords de la face, sur les deux côtés restants de l'élément de substrat, où la mise en prise des formations de fixation (28, 30, 38, 40) d'éléments de substrat adjacents permet aux éléments de substrat de se déplacer longitudinalement et transversalement vers les formations de fixation mises en prise.

28. Système tel que revendiqué à la Revendication 27, **caractérisé en ce que** la mise en prise des formations de fixation (28, 30, 38, 40) forme un verrou pinceur.
